# EUROPÄISCHE PATENTANMELDUNG

(11) **EP 1 025 941 A2**
(43) Veröffentlichungstag der Anmeldung: **09.08.2000**
(21) Anmeldenummer: 00101748.2
(22) Anmeldetag: 28.01.2000
(51) Int. Cl.: B23B 31/26

(54) **Einrichtung zum Werkzeugeinzug**

(30) Priorität: 06.02.1999 DE 19904866
(71) Anmelder: Gebr. Heller Maschinenfabrik GmbH, D-72622 Nürtingen (DE)
(72) Erfinder: Hiller, Norbert, 73240 Wendlingen (DE); Metze, Olaf, 33758 Schloss Holte-Stukenbrock (DE)
(74) Vertreter: Kohl, Karl-Heinz

(57) **Zusammenfassung**

Die Einrichtung hat eine Zugstange (7), mit der Spannelemente (11) aus einer Löse- in eine Spannstellung verstellt werden können. Mit Rastelementen (12) wird ein Werkzeugschaft (3) vor dem Einspannen mittels der Spannelemente (11) in einer Aufnahme (2) der Spindel (1) gehalten. Die Rastelemente (12) stehen unter Federkraft und sind durch Kugeln gebildet, die durch Druckkugeln radial gegen den Werkzeugschaft (3) gedrückt werden. Eine solche Einrichtung ist konstruktiv aufwendig und störanfällig. Um eine schnelle, sichere und kostengünstige Einspannung eines Werkzeuges (4) oder Werkzeughalters in der Spindel (1) bei konstruktiv einfacher Ausbildung zu ermöglichen, wirken die zur Erzielung der Rastkraft der Rastelemente (12) vorgesehenen Federkräfte in einer gemeinsamen radialen Ebene der Einrichtung. Da die Federkräfte nicht radial umgelenkt werden, kann die Einrichtung konstruktiv einfach ausgebildet sein. Mit der Einrichtung lassen sich Werkzeuge (4) oder Werkzeughalter einspannen.

## Beschreibung

Die Erfindung betrifft eine Einrichtung zum Werkzeugeinzug nach dem Oberbegriff des Anspruches 1.

Werkzeugmaschinen mit automatischem Arbeitsablauf erfordern den Einsatz mehrerer Werkzeuge in einer von der vorgesehenen Bearbeitung vorgegebenen Reihenfolge. Die Werkzeuge werden von einem ein- oder vorzugsweise doppelarmigen Greifer in eine Maschinenspindel geladen bzw. entladen. An einer dafür geeigneten Stelle des Werkzeuges fassen spindelseitige Spannelemente das Werkzeug und ziehen es in einen Spannkegelsitz oder gegen einen Plananschlag. Es ist bekannt (EP 0 590 751 B1), das Werkzeug nach dem Einsetzen in die den Spannkegelsitz bildende Aufnahme mittels Kugeln als Rastelemente zu halten. Sie liegen in radial gerichteten Bohrungen einer Hülse, die in der Bohrung der Maschinenspindel angeordnet ist. In axialen Bohrungen der Hülse befinden sich Druckfedern, mit denen kleinere Kugeln belastet werden, die unter der Kraft der Druckfedern an den im Durchmesser größeren Rastkugeln anliegen, welche dadurch radial nach innen belastet werden. Die von den Druckfedern ausgeübten Federkräfte werden somit über die kleineren Druckkugeln radial in die Rastkräfte umgelenkt. Diese Ausbildung ist konstruktiv aufwendig und störanfällig. Insbesondere die Kraftumlenkung erfordert erheblichen Aufwand.

Es sind auch Einrichtungen bekannt, bei denen lediglich die spindelseitigen Spannelemente vorgesehen sind, mit denen die Werkzeuge in den Spannkegelsitz oder gegen einen Plananschlag gezogen werden. Der Greifer des Wechselarmes muß während der gesamten Zeit, in der die Spannelemente das Werkzeug fassen und es über einen bestimmten Spannweg in die Spindel einziehen, bis ein sicherer Sitz gewährleistet ist, das Werkzeug zusätzlich halten. Beim Entspannen läuft dieser Vorgang in umgekehrter Reihenfolge mit einem entsprechenden Zeitbedarf ab. Der Werkzeugwechselvorgang, der notwendigerweise die Bearbeitung der Werkstücke unterbricht, benötigt somit erhebliche Zeit.

Der Erfindung liegt die Aufgabe zugrunde, die gattungsgemäße Einrichtung so auszubilden, daß eine schnelle, sichere und kostengünstige Einspannung eines Werkzeuges oder Werkzeughalters in der Spindel bei konstruktiv einfacher Ausbildung möglich ist.

Diese Aufgabe wird bei der gattungsgemäßen Einrichtung erfindungsgemäß mit den kennzeichnenden Merkmalen des Anspruches 1 gelöst.

Bei der erfindungsgemäßen Einrichtung werden die Federkräfte, die zur Erzielung der Rastkraft der Rastelemente aufgebracht werden, nicht radial umgelenkt, sondern wirken in einer gemeinsamen radialen Ebene der erfindungsgemäßen Einrichtung. Dadurch kann sie konstruktiv sehr einfach ausgebildet sein, ohne daß dadurch die Funktionssicherheit beeinträchtigt ist.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Es zeigen
- Fig. 1: eine erfindungsgemäße Einrichtung zum Werkzeugeinzug in Spannstellung, teilweise im Axialschnitt und teilweise in Ansicht,
- Fig. 2: eine Draufsicht auf die erfindungsgemäße Einrichtung gemäß Fig. 1,
- Fig. 3: in einer Darstellung entsprechend Fig. 1 die erfindungsgemäße Einrichtung in einer Lösestellung,
- Fig. 4: in Draufsicht die Einrichtung gemäß Fig. 3.

Die Einrichtung ist in einer Maschinenspindel 1 untergebracht, die stirnseitig eine konische Aufnahme 2 für einen Werkzeugschaft 3 aufweist. Mit ihm wird ein Werkzeug 4 in die konische Aufnahme 2 eingesetzt und mit der Einrichtung gehalten. Der Werkzeugschaft 3 ist an seinem freien Ende mit einem Einzugsbolzen 5 versehen, der am freien Ende mit einem Bund 6 versehen ist.

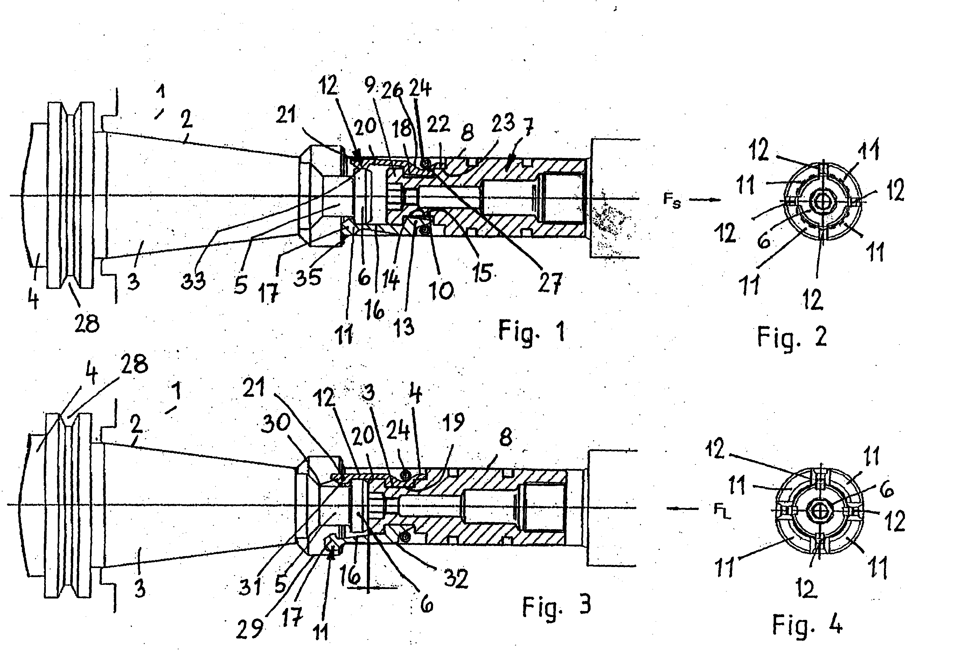

Die Einrichtung zum Einzug des Werkzeuges 4 ist axial und zentrisch in der Maschinenspindel 1 untergebracht und hat eine Zugstange 7, die in bekannter Weise in der Maschinenspindel zum Spannen des Werkzeuges 4 bzw. zum Freigeben axial verschoben werden kann. Die Zugstange 7 ist abgedichtet in einer zentralen axialen Bohrung 8 der Maschinenspindel 1 untergebracht. Die Zugstange 7 ist an ihrem der Aufnahme 2 zugewandten Ende 9 im Außendurchmesser verkleinert und weist an diesem Ende eine Ringnut 10 auf. Sie dient zur Aufnahme von Keilen von Spannelementen 11 und Rastelementen 12. Wie Fig. 2 zeigt, sind über den Umfang der Zugstange 7 vier Spannelemente 11 angeordnet, die jeweils gleich ausgebildet sind und sich jeweils über einen Winkelbereich von etwa 60° erstrecken.

Die Rastelemente 12 liegen im Bereich zwischen benachbarten Spannelementen 11.

Die Spannelemente 11 sind als einarmige Hebel ausgebildet, die mit einem radial nach innen gerichteten Endabschnitt 13 in die Ringnut 10 der Zugstange 7 eingreifen. Das dem einzuspannenden Werkzeug 4 zugewandte Ende der Spannelemente 11 ist in bekannter Weise verdickt ausgebildet. Der in die Ringnut 10 eingreifende Endabschnitt 13 der Spannelemente 11 hat eine Anlagefläche 14, mit der das Spannelement 11 in der Lösestellung (Fig. 3) flächig am Boden 15 der Ringnut 10 anliegt. Von diesem Endabschnitt 13 aus erstreckt sich ein Schenkel 16, dessen freies Ende 17 verdickt ausgebildet ist und zum Einspannen des Werkzeuges 4 dient.

Die Rastelemente 12 sind als zweiarmige Hebel ausgebildet und haben einen radial nach innen ragenden Lagerabschnitt 18, mit dem sie in die Ringnut 10 eingreifen. Dieser Lagerabschnitt wird durch eine Verdickung der Rastelemente 12 gebildet. In der Lösestellung (Fig. 3) liegen die Lagerabschnitte 18 mit einer Anlagefläche 19 flächig am Boden 15 der Ringnut 10 an. Vom Lagerabschnitt 18 erstreckt sich in Richtung auf die Aufnahme 2 der Maschinenspindel 1 ein Schenkel 20, der am freien Ende eine im Axialschnitt etwa trapezförmige, radial nach innen gerichtete Verdickung 21 aufweist. Mit ihr hintergreifen die Rastelemente 12 in der Lösestellung (Fig. 3) den Bund 6 des Einzugsbolzens 5.

Vom Lagerabschnitt 18 aus erstreckt sich entgegengesetzt zum Schenkel 20 ein kurzer Schenkel 22, mit dem die Rastelemente 12 außerhalb der Ringnut 10 an einer im Durchmesser verringerten Mantelfläche 23 der Zugstange 7 anliegen.

Die Spannelemente 11 und die Rastelemente 12 sind durch ein gemeinsames Federelement 24 belastet, das vorzugsweise eine Ringfeder ist. Sie liegt in Höhe der Ringnut 10 und liegt am Endabschnitt 13 der Spannelemente 11 sowie am Lagerabschnitt 18 der Rastelemente 12 unter Spannung an. Die Endabschnitte 13 der Spannelemente 11 haben eine Schrägfläche 25, die sich vom Schenkel 16 aus radial schräg nach innen erstreckt und an der das Federelement 24 anliegt. Der Lagerabschnitt 18 der Rastelemente 12 ist außenseitig mit einer im Axialschnitt V-förmigen Vertiefung 26 versehen. Das Federelement 24 liegt an dem an den Schenkel 22 anschließenden Bodenabschnitt 27 der Vertiefung 26 an.

Um das Werkzeug 4 einzuspannen, wird es mit einem (nicht dargestellten) Greifer, der in eine Greifernut 28 des Werkzeuges 4 eingreift, mit seinem Werkzeugschaft 3 in die kegelige Aufnahme 2 der Maschinenspindel 1 eingesetzt. Die Zugstange 7 ist hierbei axial in Richtung auf die Aufnahme 2 verschoben (Fig. 3). Die Spannelemente 11 ragen in dieser Lage mit ihren freien Enden 17 in einen erweiterten Bohrungsabschnitt 29. Dies hat zur Folge, daß die Spannelemente 11 unter der Kraft des Federelementes 24 radial so weit nach außen schwenken können, bis die Anlageflächen 14 der Endabschnitte 13 der Spannelemente 11 am Boden 15 der Ringnut 10 flächig anliegen. Die Schenkel 20 der Rastelemente 12 sind kürzer als die Schenkel 16 der Spannelemente 11. Die Rastelemente 12 werden in der Lösestellung unter der Kraft des Federelementes 24 radial nach innen geschwenkt, bis die Anlagefläche 19 des Lagerabschnittes 18 flächig am Boden 15 der Ringnut 10 anliegt.

Die Verdickungen 21 am freien Ende der Schenkel 20 der Rastelemente 12 weisen eine Einführschräge 30 auf, die in eine auf einem gedachten Zylindermantel liegende Anlagefläche 31 der Verdickung 21 anschließt.

Beim Einsetzen des Werkzeugschaftes 3 in die Aufnahme 2 der Maschinenspindel 1 liegen die durch das Federelement 24 radial nach außen geschwenkten Spannelemente 11 außerhalb des Bewegungsweges des Bundes 6 des Einzugsbolzens 5. Die Rastelemente 12 hingegen liegen im Bewegungsweg des Bundes 6, der beim Einsetzen des Werkzeuges in die Aufnahme 2 mit seinem Bund 6 auf die Einführschrägen 30 der Rastelemente 12 trifft. Dadurch werden die Rastelemente durch den Bund 6 so weit radial nach außen geschwenkt, bis die Rastelemente 21 den Bund 6 hintergreifen (Fig. 3).

Im Bereich der Ringnut 10 ist die Zugstange 7 im Außendurchmesser so weit verringert, daß die Rastelemente 12 in der Lösestellung einen solchen Abstand von der Innenwand der Bohrung 8 haben, daß die Schenkel 20 der Rastelemente 12 beim Einsetzen des Werkzeugschaftes 3 in die Aufnahme 2 in der beschriebenen Weise nach außen schwenken können. Während dieses Einsteckvorganges liegen die Spannelemente 11 mit der Außenseite 32 ihrer Schenkel 16 flächig an der Innenwand der Bohrung 8 der Maschinenspindel 1 an.

Durch die in Winkelabständen von 90° zueinander angeordneten Rastelemente 12 wird das Werkzeug 4 unmittelbar nach dem Einsetzen in die kegelige Aufnahme 2 der Maschinenspindel 1 bereits gefaßt und gehalten, so daß der Greifer des Wechselarmes das Werkzeug und auch die Maschinenspindel 1 sofort freigeben und sich aus der Störkontur entfernen kann. Die Rastelemente 12 halten das Werkzeug 4 sicher in der Aufnahme 2.

Anschließend wird die Zugstange 7 in der Spindel 1 axial zurückgezogen. Hierbei werden die Spannelemente 11, die mit ihren Spannabschnitten 17 am Übergang von der Bohrung 8 in den erweiterten Bohrungsabschnitt 29 liegen, sofort radial nach innen gegen die Kraft des Federelementes 24 geschwenkt. Die Spannabschnitte 17 hintergreifen dann den Bund 6 des Einzugsbolzens 5. Im gleichen Maße, in dem die Spannabschnitte 17 den Bund 6 hintergreifen, gelangen die Rastabschnitte 21 der Rastelemente 12 mit ihrer Anlagefläche 31 auf die zylindrische Mantelfläche 33 des Bundes 6 (Fig. 1). Die Anlagefläche 31 schließt an ihrem von der Einführschräge abgewandten Ende an eine radial nach außen verlaufende Schrägfläche 34 an, die gewährleistet, daß die Rastelemente 12 beim Zurückfahren der Zugstange 7 aus ihrer Raststellung gemäß Fig. 3 gegen die Kraft des Federelementes 24 nach außen schwenken können, bis in der Spannstellung die Anlagefläche 31 an der zylindrischen Mantelfläche 33 des Bundes 6 anliegt.

Die Zugstange 7 wird so weit axial zurückgefahren, bis die Spannabschnitte 17 mit ihren Außenseiten 35 (Fig. 1) flächig an der Innenwand der Bohrung 8 in der Maschinenspindel 1 anliegen. Durch die Spannelemente 11 wird der Werkzeugschaft 3 in die kegelige Aufnahme 2 gezogen und das Werkzeug 4 sicher gespannt.

Soll das Werkzeug 4 gewechselt werden, wird die Zugstange 7 aus der Stellung gemäß Fig. 1 axial in die Stellung gemäß Fig. 3 verschoben. Sobald die Rastabschnitte 21 hinter den Bund 6 des Einzugsbolzens 5 gelangen, schwenken sie unter der Kraft des Federelementes 24 radial nach innen, wobei sie den Bund 6 hintergreifen (Fig. 3). Etwas später gelangen die Spannelemente 11 mit ihren Spannabschnitten 17 in den erweiterten Bohrungsabschnitt 29, so daß sie unter der Kraft des Federelementes 24 radial nach außen in die Lösestellung schwenken. Das Werkzeug 3 ist in dieser Lösestellung durch die Rastelemente 12 sicher gehalten, so daß das Werkzeug 4 nicht selbsttätig aus der Aufnahme 2 der Maschinenspindel 1 gelangen kann. Die Zugstange 7 schlägt am Bund 6 des Einzugsbolzens 5 an, wodurch das Werkzeug 4 geringfügig aus der Aufnahme 2 geschoben wird. Dieser Ausstoßweg liegt in der Größenordnung von 0,5 mm. Die Rastelemente 12 halten hierbei das Werkzeug 4 sicher. Erst jetzt muß das Werkzeug 2 zum Wechsel mit dem Greifer des Wechselarmes gefaßt werden. Mit ihm kann das Werkzeug 4 herausgezogen werden. Durch den Bund 6 werden hierbei die Rastelemente 12 gegen die Kraft des Federelementes 24 durch den Bund 6 nach außen geschwenkt. Sobald das Werkzeug 4 entnommen ist, liegen die Rastelemente 12 mit der Innenseite ihrer Schenkel 20 am Mantel des bundartigen Endes 9 der Zugstange 7 an.

Aufgrund der Rastelemente 12 muß der Greifer des Wechselarmes das Werkzeug 4 beim Wechselvorgang nicht während der gesamten Zeit, in der die spindelseitigen Spannelemente 11 das Werkzeug 4 fassen und es über einen bestimmten Spannweg in die Maschinenspindel 1 einziehen, halten. Das Werkzeug 4 wird sofort nach Einsetzen in die Maschinenspindel 1 durch die Rastelemente 4 gehalten, so daß der Greifer das Werkzeug sofort freigeben kann. Etwa derselbe Zeitgewinn ergibt sich auch beim Lösevorgang des Werkzeuges 4. Der Werkzeugwechselzyklus wird somit schneller, so daß an der entsprechenden Maschine Nebenzeiten eingespart werden können.

Die Rastelemente 12 können als Sicherungselemente eingesetzt werden, falls die Spannelemente 11 ausfallen sollten, beispielsweise durch einen Bruch.

Die von der Zugstange 7 auf das Werkzeug 4 ausgeübte Spannkraft F_{S} (Fig. 1) ist axial gerichtet. Auch die von den Rastabschnitten 21 der Rastelemente 12 ausgeübte Rastkräfte wirken axial. Die Spannelemente 11 und die Rastelemente 12 werden durch das gemeinsame Federelement 24 beaufschlagt, so daß sich eine einfache konstruktive Ausbildung ergibt. Die Spannelemente 11 und die Rastelemente 12 werden durch das Federelement 24 gegensinnig zueinander verschwenkt. Die zur Erzielung der Rastkräfte vorgesehenen, durch das Federelement 24 ausgeübten Federkräfte liegen in einer Radialebene der Einrichtung. Diese Federkräfte wirken unmittelbar auf die Spannelemente 11 und die Rastelemente 12. Unter der jeweiligen Federkraft werden die Spannelemente 11 und die Rastelemente 12 im erforderlichen Maß geschwenkt.

Im dargestellten Ausführungsbeispiel ziehen die Spannelemente 11 das Werkzeug 4 in den Spannkegelsitz. Es ist auch möglich, das Werkzeug gegen einen Plananschlag zu ziehen.

## Patentansprüche

1. Einrichtung zum Werkzeugeinzug, mit einer Zugstange, mit der Spannelemente aus einer Löse- in eine Spannstellung verstellbar sind, und mit Rastelementen, mit denen ein Werkzeugschaft vor dem Einspannen mittels der Spannelemente in einer Aufnahme der Spindel gehalten wird und die unter Federkraft stehen,
dadurch gekennzeichnet, daß die zur Erzielung der Rastkraft der Rastelemente (12) vorgesehenen Federkräfte in einer gemeinsamen radialen Ebene der Einrichtung wirken.

2. Einrichtung nach Anspruch 1,
dadurch gekennzeichnet, daß die Rastelemente (12) schwenkbare Hebel sind.

3. Einrichtung nach Anspruch 2,
dadurch gekennzeichnet, daß die Rastelemente (12) zweiarmige Hebel sind.

4. Einrichtung nach einem der Ansprüche 1 bis 3,
dadurch gekennzeichnet, daß die Rastelemente (12) und die Spannelemente (11) abwechselnd angeordnet sind.

5. Einrichtung nach einem der Ansprüche 1 bis 4,
dadurch gekennzeichnet, daß die Spannelemente (11) und die Rastelemente (12) durch ein gemeinsames Federelement (24) belastet sind.

6. Einrichtung nach Anspruch 5,
dadurch gekennzeichnet, daß das Federelement (24) eine Ringfeder ist.

7. Einrichtung nach einem der Ansprüche 1 bis 6,
dadurch gekennzeichnet, daß die Spannelemente (11) einarmige Hebel sind.

8. Einrichtung nach einem der Ansprüche 2 bis 7,
dadurch gekennzeichnet, daß die Spannelemente (11) und die Rastelemente (12) durch Federkraft gegensinnig zueinander schwenkbar sind.

9. Einrichtung nach einem der Ansprüche 1 bis 8,
dadurch gekennzeichnet, daß die Rastelemente (12) in der Lösestellung der Spannelemente (11) einen Bund (6) eines Einzugsbolzens (5) des Werkzeuges (4) hintergreifen.

10. Einrichtung nach einem der Ansprüche 1 bis 9,
dadurch gekennzeichnet, daß die Rastelemente (12) jeweils einen Rastabschnitt (17) aufweisen, der mit einer Einführschräge (30) versehen ist.

11. Einrichtung nach einem der Ansprüche 1 bis 10,
dadurch gekennzeichnet, daß die Rastelemente (12) in Achsrichtung der Einrichtung kürzer sind als die Spannelemente (11).

12. Einrichtung nach einem der Ansprüche 1 bis 11,
dadurch gekennzeichnet, daß die Spannelemente (11) die Rastelemente (12) entgegen Einsteckrichtung der Werkzeuge (4) axial überragen.

13. Einrichtung nach einem der Ansprüche 1 bis 12,
dadurch gekennzeichnet, daß die Spannelemente (11) und die Rastelemente (12) in eine Ringnut (10) der Zugstange (7) eingreifen.
